# DEMANDE DE BREVET EUROPEEN

(11) **EP 3 205 902 A1**
(43) Date de publication de la demande: **16.08.2017**
(21) Numéro de dépôt: 17155873.7
(22) Date de dépôt: 13.02.2017
(51) Int. Cl.: F16G 15/08, F16B 45/02

(54) **DISPOSITIF D'ATTACHE À ÉMERILLON COMPRENANT UN PREMIER ET UN DEUXIÈME ANNEAU**

(30) Priorité: 12.02.2016 FR 1651145
(71) Demandeur: Dehondt, Thierry Jean Alain Cornil, 51430 Tinqueux (FR)
(72) Inventeur: Dehondt, Thierry Jean Alain Cornil, 51430 Tinqueux (FR)
(74) Mandataire: Sayettat, Julien Christian

(57) **Abrégé**

L'invention concerne un dispositif (1) dont les anneaux (2, 3) sont reliés l'un à l'autre par une première (4) et une deuxième (5) base respectives pouvant tourner librement et présentant les caractéristiques suivantes : au moins ledit premier anneau est conformé en crochet définissant une ouverture (7) d'accès pourvue d'un portillon (9) de fermeture monté en rotation sur ladite extrémité libre dudit crochet ; ledit portillon en position ouverte est saillant vers l'extérieur ; ledit dispositif comprend en outre une tige de verrouillage (12) s'étendant selon un troisième axe (22) ; la deuxième extrémité (13) dudit portillon est pourvue d'un premier orifice (14) de réception de ladite tige en verrouillage ; ladite première base est pourvue d'une partie de verrouillage (15), ladite partie étant déportée radialement par rapport audit premier axe, ladite partie étant pourvue d'au moins un deuxième orifice (16) de réception de ladite tige en verrouillage, ledit troisième axe est positionné de manière à ne pas couper ledit premier axe.

## Description

L'invention concerne un dispositif d'attache à émerillon.

Il est connu, notamment du brevet US2006107499-A1, de réaliser un dispositif d'attache à émerillon comprenant un premier et un deuxième anneau, lesdits anneaux étant reliés l'un à l'autre par une première et une deuxième base respectives pouvant tourner librement l'une par rapport à l'autre autour d'un premier axe de rotation, ledit dispositif présentant en outre les caractéristiques suivantes :
- au moins ledit premier anneau est conformé en crochet de manière à présenter une face de réception d'un élément d'arrimage - ledit élément étant par exemple sous forme de câble ou de barreau d'échelle -, ladite face étant disposée en regard de ladite première base,
- ledit crochet définit une ouverture d'accès s'étendant entre ladite première base et l'extrémité libre dudit crochet,
- ladite ouverture est pourvue d'un portillon de fermeture monté en rotation sur ladite extrémité libre dudit crochet, par une première de ses extrémités, selon un deuxième axe sensiblement perpendiculaire audit premier axe,
- ledit portillon en position ouverte est saillant vers l'extérieur,
- ledit dispositif comprend en outre une tige de verrouillage s'étendant selon un troisième axe,
- la deuxième extrémité dudit portillon est pourvue d'un premier orifice de réception de ladite tige en verrouillage,
- ladite première base est pourvue d'une partie de verrouillage, ladite partie étant déportée radialement par rapport audit premier axe, ladite partie étant pourvue d'au moins un deuxième orifice de réception de ladite tige en verrouillage.

L'ouverture du portillon vers l'extérieur permet de profiter de toute la largeur de l'ouverture pour assurer son arrimage sur des éléments pouvant présenter une section analogue à ladite largeur.

Cependant, le dispositif connu présente l'inconvénient d'avoir une hauteur importante - ladite hauteur étant mesurée selon le premier axe - et accessoirement un poids important.

En effet, dans la réalisation connue, la partie de verrouillage est disposée dans le prolongement de la première base, selon le premier axe, ce qui augmente d'autant la hauteur du dispositif.

Or, il est parfois nécessaire de disposer d'un dispositif qui présente une hauteur minimale - et un poids minimal - notamment lorsqu'il est utilisé dans un système d'arrimage de personnes de petite taille, comme des enfants.

Etant donné la faible longueur de la tige de verrouillage divulguée dans le document cité ci-dessus, il aurait pu être envisagé que la partie de verrouillage soit disposée à même hauteur que la première base, ce qui aurait permis de résoudre le problème posé.

Cependant, l'agencement connu ne peut être mis en oeuvre que dans le cas d'une tige de verrouillage suffisamment courte pour ne pas couper le premier axe.

Or, il peut être nécessaire, afin d'assurer un verrouillage robuste, de disposer d'une tige de verrouillage d'une longueur telle qu'elle ne pourrait être mise en oeuvre dans l'agencement connu.

En définitive, l'invention a pour but de proposer un dispositif de hauteur minimisée et pouvant être pourvu d'une tige de verrouillage suffisamment longue pour assurer un verrouillage robuste.

A cet effet, l'invention propose un dispositif d'attache à émerillon comprenant un premier et un deuxième anneau, lesdits anneaux étant reliés l'un à l'autre par une première et une deuxième base respectives pouvant tourner librement l'une par rapport à l'autre autour d'un premier axe de rotation, ledit dispositif présentant en outre les caractéristiques suivantes :
- au moins ledit premier anneau est conformé en crochet de manière à présenter une face de réception d'un élément d'arrimage, ladite face étant disposée en regard de ladite première base,
- ledit crochet définit une ouverture d'accès s'étendant entre ladite première base et l'extrémité libre dudit crochet,
- ladite ouverture est pourvue d'un portillon de fermeture monté en rotation sur ladite extrémité libre dudit crochet, par une première de ses extrémités, selon un deuxième axe sensiblement perpendiculaire audit premier axe,
- ledit portillon en position ouverte est saillant vers l'extérieur,
- ledit dispositif comprend en outre une tige de verrouillage s'étendant selon un troisième axe,
- la deuxième extrémité dudit portillon est pourvue d'un premier orifice de réception de ladite tige en verrouillage,
- ladite première base est pourvue d'une partie de verrouillage, ladite partie étant déportée radialement par rapport audit premier axe, ladite partie étant pourvue d'au moins un deuxième orifice de réception de ladite tige en verrouillage,
ledit dispositif présentant en outre la caractéristique que ledit troisième axe est positionné de manière à ne pas couper ledit premier axe.

Avec l'agencement proposé, on dispose d'un dispositif de hauteur minimisée et pouvant être pourvu d'une tige de verrouillage suffisamment longue pour assurer un verrouillage robuste, ladite tige ne pouvant en aucun cas interférer avec le premier axe étant donné le positionnement du troisième axe.

D'autres particularités et avantages de l'invention apparaîtront dans la description qui suit, faite en référence aux figures jointes, dans lesquelles :

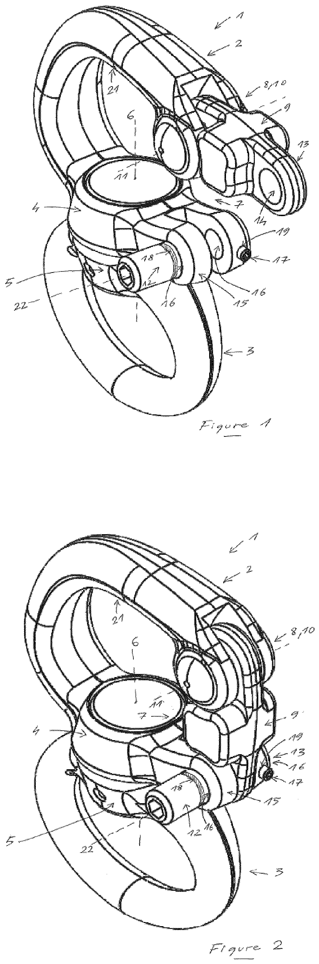

- la figure 1 est une vue schématique en perspective d'un dispositif selon une réalisation, le portillon étant ouvert,
- la figure 2 est analogue à la figure 1, le portillon étant fermé et la tige de verrouillage étant en position de déverrouillage.

En référence aux figures, on décrit un dispositif 1 d'attache à émerillon comprenant un premier 2 et un deuxième 3 anneau, lesdits anneaux étant reliés l'un à l'autre par une première 4 et une deuxième 5 base respectives pouvant tourner librement l'une par rapport à l'autre autour d'un premier axe 6 de rotation, ledit dispositif présentant en outre les caractéristiques suivantes :
- au moins ledit premier anneau est conformé en crochet de manière à présenter une face de réception 21 d'un élément d'arrimage - ledit élément étant par exemple sous forme de câble ou de barreau d'échelle -, ladite face étant disposée en regard de ladite première base,
- ledit crochet définit une ouverture 7 d'accès s'étendant entre ladite première base et l'extrémité libre 8 dudit crochet,
- ladite ouverture est pourvue d'un portillon 9 de fermeture monté en rotation sur ladite extrémité libre dudit crochet, par une première 10 de ses extrémités, selon un deuxième axe 11 sensiblement perpendiculaire audit premier axe,
- ledit portillon en position ouverte est saillant vers l'extérieur,
- ledit dispositif comprend en outre une tige de verrouillage 12 s'étendant selon un troisième axe 22,
- la deuxième extrémité 13 dudit portillon est pourvue d'un premier orifice 14 de réception de ladite tige en verrouillage,
- ladite première base est pourvue d'une partie de verrouillage 15, ladite partie étant déportée radialement par rapport audit premier axe, ladite partie étant pourvue d'au moins un deuxième orifice 16 de réception de ladite tige en verrouillage,
ledit dispositif présentant en outre la caractéristique que ledit troisième axe est positionné de manière à ne pas couper ledit premier axe.

Selon la réalisation représentée, le crochet vu de profil présente une forme générale en C.

Selon la réalisation représentée, le troisième axe 22 est sensiblement - et en particulier strictement dans la réalisation représentée - parallèle au deuxième axe 11.

Selon la réalisation représentée, la tige de verrouillage 12 est en forme de vis, au moins le premier 14 et/ou deuxième 16 orifice étant pourvu d'un alésage fileté de réception de ladite vis.

Selon une réalisation, l'alésage de réception de la vis 12 s'étend de sorte que ladite vis reste vissée dans ledit alésage quand elle est mise en position de déverrouillage, ce qui évite le risque de la perdre lorsque l'on ouvre le portillon 9.

Selon une autre réalisation non représentée, la tige de verrouillage 12 est sous forme de rivet.

Selon la réalisation représentée, la partie de verrouillage 15 présente, en vue axiale selon le premier axe 6, une forme générale en U, la deuxième extrémité 13 du portillon 9 s'insérant entre les branches du U lorsque ledit portillon est en position fermée, ladite partie de verrouillage étant pourvue de deux deuxièmes orifices 16 disposés respectivement sur chacune desdites branches de sorte que la tige de verrouillage 12 traverse lesdits deuxièmes orifices et le premier orifice 14 lorsqu'elle est disposée en verrouillage.

Selon la réalisation représentée, le dispositif 1 présente en outre les caractéristiques suivantes :
- il comprend en outre une tige de sécurisation 17, de manière à empêcher un retrait accidentel de la tige de verrouillage 12,
- ladite tige de verrouillage est pourvue d'une partie de réception 18 de ladite tige de sécurisation,
- la partie de verrouillage 15 est pourvue d'un troisième orifice 19 de réception de ladite tige de sécurisation.

Selon la réalisation représentée, la partie de réception 18 est sous forme d'une rainure circulaire réalisée sur la tige de verrouillage 12, la tige de sécurisation 17 étant sous forme de vis coopérant avec un filetage prévu dans le troisième orifice 19.

Avec un tel agencement, le serrage de la tige de sécurisation 17 a pour effet d'introduire son extrémité libre dans la rainure, ce qui empêche le retrait de la tige de verrouillage 12

En variante non représentée, la partie de réception 18 est sous forme d'un quatrième orifice radial réalisé dans la tige de verrouillage 12, la tige de sécurisation 17 étant sous forme d'une goupille traversant le troisième orifice 19 et ledit quatrième orifice.

Le dispositif 1 peut comprendre en outre un ressort, notamment en spirale et non visible sur les figures, de rappel du portillon 9 vers sa position fermée.

Le ressort de rappel est notamment localisé au niveau du deuxième axe 11.

Selon la réalisation représentée, le deuxième anneau 3 est dépourvu d'ouverture.

## Revendications

1. Dispositif (1) d'attache à émerillon comprenant un premier (2) et un deuxième (3) anneau, lesdits anneaux étant reliés l'un à l'autre par une première (4) et une deuxième (5) base respectives pouvant tourner librement l'une par rapport à l'autre autour d'un premier axe (6) de rotation, ledit dispositif présentant en outre les caractéristiques suivantes :
• au moins ledit premier anneau est conformé en crochet de manière à présenter une face de réception (21) d'un élément d'arrimage, ladite face étant disposée en regard de ladite première base,
• ledit crochet définit une ouverture (7) d'accès s'étendant entre ladite première base et l'extrémité libre (8) dudit crochet,
• ladite ouverture est pourvue d'un portillon (9) de fermeture monté en rotation sur ladite extrémité libre dudit crochet, par une première (10) de ses extrémités, selon un deuxième axe (11) sensiblement perpendiculaire audit premier axe,
• ledit portillon en position ouverte est saillant vers l'extérieur,
• ledit dispositif comprend en outre une tige de verrouillage (12) s'étendant selon un troisième axe (22),
• la deuxième extrémité (13) dudit portillon est pourvue d'un premier orifice (14) de réception de ladite tige en verrouillage,
• ladite première base est pourvue d'une partie de verrouillage (15), ladite partie étant déportée radialement par rapport audit premier axe, ladite partie étant pourvue d'au moins un deuxième orifice (16) de réception de ladite tige en verrouillage,
ledit dispositif étant **caractérisé en ce que** ledit troisième axe est positionné de manière à ne pas couper ledit premier axe.

2. Dispositif selon la revendication 1, **caractérisé en ce que** le troisième axe (22) est sensiblement parallèle au deuxième axe (11).

3. Dispositif selon l'une des revendications 1 ou 2, **caractérisé en ce que** la tige de verrouillage (12) est en forme de vis, au moins le premier (14) et/ou deuxième (16) orifice étant pourvu d'un alésage fileté de réception de ladite vis.

4. Dispositif selon l'une des revendications 1 ou 2, **caractérisé en ce que** la tige de verrouillage (12) est sous forme de rivet.

5. Dispositif selon l'une quelconque des revendications 1 à 4, **caractérisé en ce que** la partie de verrouillage (15) présente, en vue axiale selon le premier axe (6), une forme générale en U, la deuxième extrémité (13) du portillon (9) s'insérant entre les branches du U lorsque ledit portillon est en position fermée, ladite partie de verrouillage étant pourvue de deux deuxièmes orifices (16) disposés respectivement sur chacune desdites branches de sorte que la tige de verrouillage (12) traverse lesdits deuxièmes orifices et le premier orifice (14) lorsqu'elle est disposée en verrouillage.

6. Dispositif selon l'une quelconque des revendications 1 à 5, **caractérisé en ce que** :
• il comprend en outre une tige de sécurisation (17), de manière à empêcher un retrait accidentel de la tige de verrouillage (12),
• ladite tige de verrouillage est pourvue d'une partie de réception (18) de ladite tige de sécurisation,
• la partie de verrouillage (15) est pourvue d'un troisième orifice (19) de réception de ladite tige de sécurisation.

7. Dispositif selon la revendication 6, **caractérisé en ce que** la partie de réception (18) est sous forme d'une rainure circulaire réalisée sur la tige de verrouillage (12), la tige de sécurisation (17) étant sous forme de vis coopérant avec un filetage prévu dans le troisième orifice (19).

8. Dispositif selon la revendication 6, **caractérisé en ce que** la partie de réception (18) est sous forme d'un quatrième orifice radial réalisé sur la tige de verrouillage (12), la tige de sécurisation (17) étant sous forme d'une goupille traversant le troisième orifice (19) et ledit quatrième orifice.

9. Dispositif selon l'une quelconque des revendications 1 à 8, **caractérisé en ce qu'**il comprend en outre un ressort de rappel du portillon (9) vers sa position fermée.
